# EUROPEAN PATENT SPECIFICATION

(11) **EP 0 486 542 B1**
(45) Date of publication and mention of the grant of the patent: **31.03.1999**
(21) Application number: 90911887.9
(22) Date of filing: 08.08.1990
(51) Int. Cl.: G01N 15/14, G06K 9/00

(54) **A METHOD OF DIFFERENTIATING PARTICLES BASED UPON A DYNAMICALLY CHANGING THRESHOLD**
VERFAHREN ZUR DIFFERENZIERUNG VON PARTIKELN BASIEREND AUF EINER DYNAMISCH ÄNDERLICHEN SCHWELLE
PROCEDE DE DIFFERENCIATION DE PARTICULES BASE SUR UN SEUIL CHANGEANT DYNAMIQUEMENT

(30) Priority: 10.08.1989 US 392057
(43) Date of publication of application: 27.05.1992
(73) Proprietor: INTERNATIONAL REMOTE IMAGING SYSTEMS, INC., Chatsworth, CA 91311-5805 (US)
(72) Inventor: KASDAN, Harvey, Lee, Van Nuys, CA 91401 (US)
(74) Representative: Jackson, David Spence
(86) International application number: US9004446
(87) International publication number: WO9102330

(56) References cited:
- EP-A- 0 149 685
- EP-A- 0 317 139
- US-A- 4 097 845
- US-A- 4 338 024
- US-A- 4 661 913
- US-A- 4 665 553
- PROCEEDINGS IECON'84 1984 INTERNATIONAL CONFERENCE ON INDUSTRIAL ELECTRONICS, CONTROL AND INSTRUMENTATION - INDUSTRIAL APPLICATION OF MICROELECTRONICS vol. 2, 22 October 1984, KEIO PLAZA INTERCONTI, TOKYO, JAPAN pages 1152 - 1157 R. SUZUKI, AHASHIZUME, ET AL. 'an automated classification of blood cells by multistage classifier'
- CYTOMETRY vol. 9, no. 3, May 1988, NEW YORK US pages 3294 - 3300 C. SOUCHIER ET AL. 'IMAGE ANALYSIS APPLIED TO PROLIFERATING CELLS IN MALIGNANT LYMPHOMA'

## Description

This invention relates to a method of identifying a plurality of different types of particles in a field of view, including the step of identifying particles of a first type by measuring a first parameter for all the particles in the field of view and identifying those particles which are of the first type, on the basis of said first parameter.

Methods to identify different particles in a field of view are well-known in the art. See, for example, U.S. Patent No. 4,175,860. Typically, the particles that are under examination are biological particles, and it is desired to automatically identify the different particles under examination. One of the problems faced by the prior art is that various parameters (such as color) associated with each particle can vary from one sample to another sample. This variation can be caused, for example, by different stains used in the preparation of different samples or, by the age of the samples. Thus, the same type of particle appearing in different fields of view may exhibit different parameters.

For example, one technique that has been offered by the prior art is to add a normalizing substance which has a predetermined, a priori detection level. Thus, for example, calibrator particles, as disclosed in U.S. Patent No. 4,338,024 can be added to a sample. Based upon the a priori knowledge of the color of the beads, if the color of the particle under examination exceeds that threshold, then that particle is identified as of a particular type. Clearly, such a normalizing substance is inadequate because the parameter of the particle can vary from sample to sample (due to the factors of different stain and ageing as discussed above), whereas the parameter of the normalizing substance does not.

In an example of the prior art using manual techniques, the DNA of all the cells are measured, and a normalizing value is manually selected for the particular sample lot for that experiment and that threshold is then used to identify the particles whose DNA exceeds that threshold or is below the threshold. With this approach, while the threshold can vary from sample to sample, it requires manual interpretation and intervention to determine the particular threshold adequate for each of these experiments.

In an article entitled "An automated classification of blood cells by multistage classifier", at pages 1152 to 1157 in the Proceedings IE CON'84 International Conference on Industrial Electronics, Control and Instrumentation - Industrial Application of Microelectronics, Vol. 2, 22 October 1984, Keio Plaza Interconti, Tokyo, Japan, R. Suzuki, A. Hashizume, H. Matsushita and R. Yabe describe a system having a three-tube, colour TV camera and a one dimensional array sensor for viewing a field containing red and white blood cells and coupled to a system that differentiates the white cells from the red cells and then classifies the white cells into six normal classes and four abnormal classes. Three optical filters are used in the TV camera, with principal wavelengths of 415 nm for blue, 525 nm for green, and 590 nm for red. The blue filter distinguishes the white cells from the red cells, and the green and red filters distinguish the white cells from the background, and the white cell nuclei from the white cell cytoplasm, and also quantize the colour of the cytoplasm. Distinguishing features of the white cells are extracted by obtaining and processing one-dimensional histograms of the different colour images. The features extracted, such as nucleus area, cytoplasm area, and average absorbance of nucleus, are quantized. The white blood cells are then classified at a first stage into five pseudo-normal classes and one abnormal class by using a normalized probabilistic function of a feature parameter vector in which the feature parameters are nucleus area, cytoplasm area, the ratio of nucleus perimeter length to nucleus area, the ratio of average density of cytoplasm to that of the nucleus in the green image, and the ratio of the average density of cytoplasm in the red image to that in the green image. At a second stage the white blood cells are re-classified into six normal classes or transferred to the abnormal class (to eliminate non-typical immature white blood cells). This classification is based on what are stated to be the most effective feature parameters for each normal class to distinguish immature white cells from mature white cells. At a third stage the same feature parameters are used as in the first stage to classify the abnormal cells into four classes. Also, classification of neutrophils into band and segmented neutrophils is included and is based on an assumption of a ratio of band to segmented neutrophils, and the use of a group of feature parameters including number of lobes, nucleus area, nucleus perimeter length, nucleus thickness, area of inlet, and length of inlet.

According to the present invention, a method of the type defined hereinbefore at the beginning is characterised by the further steps of: measuring a different second parameter of all the particles identified as being of the first type and determining a threshold value or values from the measured values of the second parameter for the particles identified as particles of the first type; and identifying the remaining particles, which do not belong to said first type, as particles belonging to one or more further types on the basis of the determined threshold value or values from among the particles not identified as being of the first type.

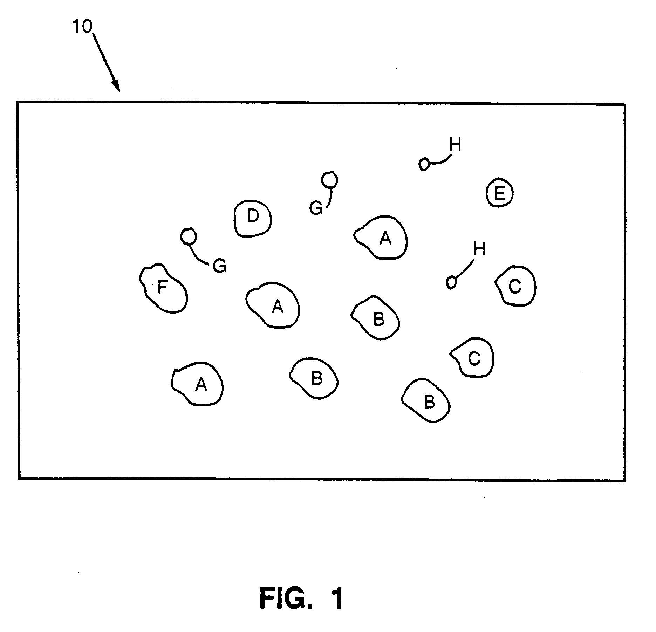

The invention will now be described by way of example with reference to the accompany drawing in which the sole figure, Fig. 1, is a schematic diagram of an image of a plurality of different types of particles in a field of view.

### Detailed Description of the Drawings

Referring to Fig. 1, there is shown an image 10 of a plurality of particles in a field of view. Although the method of the present invention will be described with respect to biological particles in a field of view, it can be appreciated that the method of the present invention can be practised with any type of particles or with any type of members in a group of members.

As shown in Fig. 1, a plurality of different types of particles (A...H) are shown in the image 10. Thus, there are three particles of type A, three particles of type B, two particles of type C ... and two particles of type H. However, when an image 10 of a plurality of particles is presented, the types of the particles are not a priori known. Further, statistical variations in certain parameters of a type of particle may exist. For example, a type A particle may be "larger" in size than particles of type B and type C, but not all particles of Type A may be of the same size. The method of the present invention distinguishes the types of particles and identifies them in the image 10 in the field of view.

As used herein, the term "identify" means to determine the label or identifier which is attached to a particular particle or group of particles. Further the term also includes the characteristics, e.g. statistical variations, of the identified group of particles. The term "distinguish" or "differentiate" means to separate a group of particles into two or more subpopulation groups based upon one or more parameters. The separation, however, does not necessarily involve identification of the subpopulation groups, i.e. determination of the label for each of the subpopulation groups.

In the method of the present invention, a first parameter is measured for each one of the plurality of particles in the image 10. The first parameter can be a parameter such as color.

Based upon the color intensity of the various particles, one of the types of particles, such as type A, is identified. Thereafter, a second parameter, different from the first parameter, is measured for the particles which have been identified; namely, particles of type A. The second parameter can be a morphological parameter; such as size, which is different from a spectral parameter such as color. Thus, the particles identified as being of type A are then measured for size.

Finally, the other particles in the field of view 10 are identified, based upon the second parameter. The second parameter is measured for each of the other particles. The measurement of the second parameter (for each of the other particles, other than particles identified as being of type A) is compared with the measurement of the second parameter determined for the particles identified as being of type A. Based upon this comparison, the other particles are then identified. Thus, for example, the morphological characteristic of size for all the other particles is then compared with the size of particle type A, and identification is based upon this comparison. If the size of a particle exceeds that of the size for particles of type A, then the particle is identified as being of a certain type, such as type B.

It should be noted while the method has been described with regard to the first parameter, which is measured as being a spectral parameter and the second parameter as being a morphological parameter, the method of the present invention can also be used where the first parameter is a morphological parameter and wherein the second parameter is a spectral parameter.

The method of the present invention will now be described with specific reference to the following examples:

### EXAMPLE 1

In a biological sample containing lymphocytes, monocytes and neutrophils, it is desired to separately identify all of these different types of particles. However, the difference between monocytes and neutrophils cannot be distinguished based upon a fixed color threshold because they differ from sample to sample. Thus, in the method of the present invention, the size of all the different particles is first measured. Lymphocytes are then distinguished from monocytes and neutrophils by the size of the Lymphocyte particles. If the size of the particles is less than approximately 50 µm² (200 .5x.5µm pixel), for example, then the particles are deemed to be lymphocytes, whereas the remaining particles include both monocytes (if any) and neutrophils (if any).

Thereafter, the color of the lymphocytes so identified is measured. The average color of all the lymphocytes identified is determined. The average color determined for the identified lymphocytes is then used as a threshold to differentiate monocytes from neutrophils. If the color of a particular particle is greater than the average color of the lymphocytes, then the particle is a neutrophil. If the color of the particle under examination is less than the average color of the identified lymphocytes, then the particle under examination is a monocyte. In this manner, monocytes and neutrophils, can be distinguished from one another and identified based upon the average color of lymphocytes in the same sample in which the monocytes and the neutrophils exist.

### EXAMPLE 2

A plurality of different types of particles including basophils are shown in an image in a field of view. The basophils are identified by color from all the other types of particles by conventional means or by the use of zeroth green quantile for B021 stained cells. For a description of quantile measurement, see co-pending U.S. application 357,324, filed on May 25, 1989 and assigned to the same assignee as the present invention.

Thereafter, the area of the identified basophils is measured in pixels and the average area of all basophils thus identified is computed. From the average area of the measured basophils, the pixel size can be determined, assuming a nominal basophil area of about 42 µm². From the pixel size determined, the other particles (such as neutrophils, eosinophils and monocytes) can be distinguished based upon this pixel size by computing all particle areas and assigning all particles with areas greater than 50µm² to the neutrophil, eosinophil and monocyte category. Alternatively, this decision may be based on the area of a particle relative to the basophil average.

### EXAMPLE 3

A plurality of different types of particles including known cancer cells and cells that are potentially cancerous are in the imaged field of view. The plurality of different types of particles are subjected to reaction with an antibody which has a color tag attached thereto. The antibody would attach itself to the known cancer cells. Those known cancer cells would have a particular color, depending on the color tag attached to the antibody. The colored cells are then located and the ploidy of the known cancer cells are measured. The ploidy of the subpopulation of known cancer cells would have a statistical distribution. Based upon this measured ploidy, the potentially cancerous cells are differentiated from the healthy cells. That is, the ploidy of the potentially cancerous cells and of the healthy cells are also measured. If the ploidy of a measured unknown cell is approximately on the same order (i.e. within the statistical distribution) as the ploidy of the known cancer cells, then that cell is potentially cancerous. On the other hand, if the ploidy of a measured unknown cell is far less than the ploidy (i.e. outside of the statistical distribution) of the measured known cancer cells, then the unknown cell is a healthy cell. In this manner, healthy cells can be distinguished from potentially cancerous cells.

### EXAMPLE 4

A gene probe for human papilloma virus (HPV) is hybridized to a plurality of different cells. The gene probe has an enzyme label attached thereto. Upon introduction of substrate material, the substrate is converted by the enzyme and produces a local colored deposit within the cell. The ploidy of the HPV population (identified by the presence of the colored deposits) may be measured and compared to the ploidy of the non-HPV population (identified by the absence of colored deposits) to determine the degree to which the HPV population has changed from normal.

The theory of operation of the method of the present invention is as follows. The invention is of a method which determines a dynamically changeable normalization threshold from which other particles can be differentiated. Unlike the prior art where the threshold is fixed or is a priori known, the method of the present invention recognizes that the threshold for each sample would differ depending on factors such as age and color stain which vary from sample to sample. Thus, the method of the present invention overcomes the problem of experimental variability; therefore, the same method can be used to differentiate cells in different experiments where the experiments of the different samples are subject to different variables.

## Claims

1. A method of identifying a plurality of different types of particles in a field of view, including the step of identifying particles of a first type by measuring a first parameter for all the particles in the field of view and identifying those particles which are of the first type, on the basis of said first parameter, characterised by the further steps of: measuring a different second parameter of all the particles identified as being of the first type and determining a threshold value or values from the measured values of the second parameter for the particles identified as particles of the first type; and identifying the remaining particles, which do not belong to said first type, as particles belonging to one or more further types on the basis of the determined threshold value or values from among the particles not identified as being of the first type.

2. A method according to claim 1, characterised in that the first parameter is a morphological parameter and the second parameter is a spectral parameter.

3. A method according to claim 1, characterised in that the first parameter is a spectral parameter and the second parameter is a morphological parameter.

4. A method according to claim 1, characterised in that the first parameter is area, the second parameter is color, and second and third types of particles are differentiated and identified on the basis of a threshold value of color determined from the average value of color of the particles of the first type, said particles of the first type are lymphocytes, the particles of the second type are monocytes, and the particles of the third type are neutrophils.

5. A method according to claim 1, characterised in that the first parameter is cell colour, the second parameter is ploidy, and second and third types of particles are differentiated and identified on the basis of threshold values determined from the statistical distribution of the ploidy of coloured cancer cells, the first particles being coloured cancer cells, and the second and third types of particles being potentially cancerous cells and healthy cells respectively.

## Patentansprüche

1. Verfahren zum Identifizieren einer Mehrzahl verschiedener Teilchenarten in einem Sichtfeld, das den Schritt der Identifizierung von Teilchen einer ersten Art durch Messen aller Teilchen im Sichtfeld auf einen ersten Parameter und Identifizieren derjenigen Teilchen, die von der ersten Art sind, auf der Grundlage des genannten ersten Parameters beinhaltet, gekennzeichnet durch die folgenden weiteren Schritte: Messen eines anderen zweiten Parameters aller Teilchen, die als zur ersten Art gehörend identifiziert wurden, und Bestimmen eines oder mehrerer Schwellenwerte aus den gemessenen Werten des zweiten Parameters für die Teilchen, die als Teilchen der ersten Art identifiziert wurden; und Identifizieren der übrigen Teilchen, die nicht zur genannten ersten Art gehören, als Teilchen, die zu einer oder mehreren weiteren Arten gehören, auf der Gundlage des/der bestimmten Schwellenwerts bzw. Schwellenwerte unter den Teilchen, die nicht als zum ersten Typ gehörend identifiziert wurden.

2. Verfahren nach Anspruch 1, dadurch gekennzeichnet, daß der erste Parameter ein morphologischer Parameter und der zweite Parameter ein Spektralparameter ist.

3. Verfahren nach Anspruch 1, dadurch gekennzeichnet, daß der erste Parameter ein Spektralparameter und der zweite Parameter ein morphologischer Parameter ist.

4. Verfahren nach Anspruch 1, dadurch gekennzeichnet, daß der erste Parameter Fläche ist, der zweite Parameter Farbe ist und Teilchen der zweiten und dritten Art auf der Grundlage eines Farbschwellenwerts unterschieden und identifiziert werden, der aus dem Durchschnittswert von Farbe der Teilchen der ersten Art bestimmt wird, wobei die genannten Teilchen der ersten Art Lymphozyten, die Teilchen der zweiten Art Monozyten und die Teilchen der dritten Art Neurophilen sind.

5. Verfahren nach Anspruch 1, dadurch gekennzeichnet, daß der erste Parameter Zellfarbe ist, der zweite Parameter Ploidie ist und Teilchen der zweiten und dritten Art auf der Grundlage von Schwellenwerten unterschieden und identifiziert werden, die aus der statistischen Verteilung des Ploidie von gefärbten Krebszellen bestimmt werden, wobei die ersten Teilchen gefärbte Krebszellen sind und die Teilchen der zweiten und dritten Art potentiell gefährliche kanzeröse Zellen bzw. gesunde Zellen sind.

## Revendications

1. Procédé d'identification d'une pluralité de types différents de particules dans un champ optique, comportant l'étape d'identification de particules d'un premier type en mesurant un premier paramètre de toutes les particules dans le champ optique et en identifiant les particules qui sont du premier type, en fonction dudit premier paramètre, caractérisé par les autres étapes de : mesure d'un deuxième paramètre différent de toutes les particules identifiées comme étant du premier type et détermination d'une ou de valeurs de seuil à partir des valeurs mesurées du deuxième paramètre pour les particules identifiées comme particules du premier type ; et identification des particules restantes, qui n'appartiennent pas audit premier type, comme des particules appartenant à un ou plusieurs autres types en fonction de la ou des valeurs de seuil déterminées parmi les particules non identifiées comme étant du premier type.

2. Procédé selon la revendication 1, caractérisé en ce que le premier paramètre est un paramètre morphologique et le deuxième paramètre est un paramètre spectral.

3. Procédé selon la revendication 1, caractérisé en ce que le premier paramètre est un paramètre spectral et le deuxième paramètre est un paramètre morphologique.

4. Procédé selon la revendication 1, caractérisé en ce que le premier paramètre est la superficie, le deuxième paramètre est la couleur, et des deuxième et troisième types de particules sont différenciés et identifiés en fonction d'une valeur de seuil de couleur déterminée à partir de la valeur moyenne de la couleur des particules du premier type, lesdites particule du premier type sont des lymphocytes, les particules du deuxième type sont des monocytes, et les particules du troisième type sont des neutrophiles.

5. Procédé selon la revendication 1, caractérisé en ce que le premier paramètre est la couleur des cellules, le deuxième paramètre est la ploïdie, et des deuxième et troisième types de particules sont différenciés et identifiés en fonction des valeurs de seuil déterminées à partir de la distribution statistique de la ploïdie des cellules cancéreuses colorées, les premières cellules étant des cellules cancéreuses colorées, et les deuxième et troisième types de particules étant des cellules potentiellement cancéreuses et des cellules saines respectivement.
